# EUROPEAN PATENT APPLICATION

(11) **EP 4 832 454 A1**
(43) Date of publication of application: **28.10.2026**
(21) Application number: 24918304.7
(22) Date of filing: 18.12.2024
(51) Int. Cl.: H04L 67/1095, H04N 21/43

(54) **SCREEN MIRRORING SHARING METHOD AND APPARATUS**

(30) Priority: 16.01.2024 CN 202410068375
(71) Applicant: Huawei Technologies Co., Ltd., Shenzhen, Guangdong 518129 (CN)
(72) Inventor: JIA, Jianguang, Shenzhen, Guangdong 518129 (CN); ZHU, Yongping, Shenzhen, Guangdong 518129 (CN); ZHANG, Yongjing, Shenzhen, Guangdong 518129 (CN); XUE, Xinpeng, Shenzhen, Guangdong 518129 (CN)
(74) Representative: Huawei European IPR
(86) International application number: PCT/CN2024/140310
(87) International publication number: WO 2025/152696

(57) **Abstract**

A screen mirroring sharing method and an apparatus are provided, to implement screen mirroring sharing. Under a condition that a call connection is established between a first device and a second device, the first device obtains first instruction information, where the first instruction information instructs to share screen mirroring information; then, the first device receives the screen mirroring information from the third device based on the first instruction information, and extracts an elementary stream ES of the screen mirroring information; and finally, the first device plays the ES, and sends the ES to the second device. Based on the foregoing method, the first device may directly extract the ES of the screen mirroring information, and transmit the ES to a peer end, thereby eliminating the time required for decoding, screen recording, and re-encoding, and greatly reducing an end-to-end latency of screen mirroring sharing. In addition, the method can improve image quality and viewing experience, and can prevent content not intended to be shared by a user from being transmitted to a peer end, thereby improving user experience.

## Description

### CROSS-REFERENCE TO RELATED APPLICATIONS

This application claims priority to Chinese Patent Application No. 202410068375.5, filed with the China National Intellectual Property Administration on January 16, 2024 and entitled "SCREEN MIRRORING SHARING METHOD AND APPARATUS", which is incorporated herein by reference in its entirety.

### TECHNICAL FIELD

This application relates to the field of communication technologies, and in particular, to a screen mirroring sharing method and an apparatus.

### BACKGROUND

Screen sharing or remote collaboration guidance during video conferences or calls has become increasingly common. With hardware upgrades of smart screens/set-top boxes (with cameras), video call applications have been introduced, allowing users to make video calls across large and small screens. During a call, when a user comes across interesting videos or other content on a small-screen mobile phone/a personal digital assistant (personal digital assistant, PDA) and wants to share the videos or content with the peer end of the call, or when a user wants to share homework content on a mobile phone/PAD with parents at the peer end for homework guidance, screen mirroring can be used to share the content with the peer end. Based on this, how to implement screen mirroring sharing is an urgent problem to be resolved.

### SUMMARY

Embodiments of this application provide a screen mirroring sharing method and an apparatus, to implement screen mirroring sharing.

According to a first aspect, this application provides a screen mirroring sharing method. The method may be applied to a first device, or to a processor, a chip, or a functional module in the first device. For example, the method is applied to a first device. The method may include: Under a condition that a call connection is established between a first device and a second device, the first device obtains first instruction information, and the first instruction information instructs to share screen mirroring information; then, the first device receives the screen mirroring information from the third device based on the first instruction information, and extracts an elementary stream ES of the screen mirroring information; and finally, the first device plays the ES, and sends the ES to the second device.

Based on the foregoing method, the first device may directly extract the ES of the screen mirroring information, and transmit the ES to a peer end, thereby eliminating the time required for decoding, screen recording, and re-encoding, and greatly reducing an end-to-end latency of screen mirroring sharing. In addition, the method can improve image quality and viewing experience, and can prevent content not intended to be shared by a user from being transmitted to a peer end, thereby improving user experience.

In a possible design, first parameter information may be further negotiated, and the first parameter information is used by the first device and the second device to share the screen mirroring information in a call process. A negotiation process of the first parameter information may be initiated by the first device, or may be initiated by the second device. This is not limited in this application. In this way, the first device and the second device may subsequently implement screen mirroring sharing in the call process based on the first parameter information.

In a possible design, the first parameter information may include an audio channel and/or a video channel to be established by the first device and the second device to share the screen mirroring information. In this way, the first device and the second device may transmit the screen mirroring information through a channel other than a call connection channel, so that the first device and the second device can simultaneously implement call holding and screen mirroring sharing.

In a possible design, second parameter information may be further negotiated, and the second parameter information is used by the third device to perform screen mirroring to the first device. A negotiation process of the second parameter information may be initiated by the first device, or may be initiated by the third device. This is not limited in this application. In this way, the third device can accurately transmit the screen mirroring information to the first device.

In a possible design, the screen mirroring information may include audio information and/or video information. Correspondingly, that the first device extracts the ES of the screen mirroring information may include: The first device extracts the ES of the audio information and/ the ES of the video information. In this way, the first device can accurately extract the ES of the screen mirroring information.

In a possible design, the first device may send the ES to the second device by using the following method: The first device may send the ES of the audio information to the second device through a first audio channel, and/or send the ES of the video information to the second device through a first video channel. The first audio channel is the audio channel corresponding to the call connection between the first device and the second device, and the first video channel is the video channel corresponding to the call connection between the first device and the second device. Alternatively, the first device may send the ES of the audio information to the second device through a second audio channel, and/or send the ES of the video information to the second device through a second video channel. The second audio channel is the audio channel used by the first device and the second device to share the screen mirroring information, and the second video channel is the video channel used by the first device and the second device to share the screen mirroring information. In this way, the first device may flexibly select, based on an actual situation, a proper manner to send the ES to the second device.

In a possible design, the first device extracts an original package time PTS corresponding to the ES of the screen mirroring information; and the first device records the PTS, and sends the PTS to the second device. In this way, the screen mirroring information transmitted between the first device and the second device can be synchronized.

In a possible design, under a condition that a call connection is established between the first device and the second device, the first device and the second device interact to determine whether a first capability is possessed, and the first capability is supporting a channel corresponding to the call connection and supporting a channel other than the channel corresponding to the call connection. In this way, it may be subsequently determined, based on capabilities of the first device and the second device, whether it is necessary to negotiate the channel other than the channel corresponding to the call connection to transmit the screen mirroring information.

In a possible design, that the first device and the second device interact to determine whether the first capability is possessed may include: The first device sends a first identifier to the second device, and the first identifier indicates whether the first device has the first capability; and the first device receives a second identifier from the second device, and the second identifier indicates whether the second device has the first capability. In this way, whether the first device and the second device have the first capability can be accurately determined.

In a possible design, the first identifier is an indication for a quantity of supported channels, or the first identifier is a preset code corresponding to the first device; and the second identifier is an indication for a quantity of supported channels, or the second identifier is a preset code corresponding to the second device. In this way, whether the first device or the second device has the first capability can be flexibly indicated.

In a possible design, before the first device receives the screen mirroring information from the third device, the first device determines whether the first parameter information is consistent with the second parameter information, the first parameter information is used by the first device and the second device to share the screen mirroring information in a call process, and the second parameter information is used by the third device to perform screen mirroring to the first device; and if the first parameter information is consistent with the second parameter information, the first device sends a screen mirroring indication to the third device; or if the first parameter information is inconsistent with the second parameter information, the first parameter information is renegotiated and the second parameter information is renegotiated, and after determining that renegotiated first parameter information is consistent with renegotiated second information, the first device sends a screen mirroring indication to the third device. In this way, the third device can accurately perform screen mirroring to the first device, so as to accurately implement screen mirroring sharing between the first device and the second device.

In a possible design, when the first device determines that the first parameter is inconsistent with the second parameter information, the first device records parameter information supported by the third device. In this way, the first device may subsequently renegotiate the first parameter information and the like based on the parameter information supported by the third device.

In a possible design, when the first parameter information is negotiated, the first parameter information may be negotiated based on the second parameter information, and the second parameter information is used by the third device to perform screen mirroring to the first device. In this way, consistency between negotiated first parameter information and negotiated second parameter information can be improved.

According to a second aspect, this application provides a screen mirroring sharing method. The method may be applied to a second device, or to a processor, a chip, or a functional module in the second device. For example, the method is applied to the second device. The method may include: Under a condition that a call connection is established between a first device and the second device, the second device receives an elementary stream ES from the first device, and the ES is extracted based on screen mirroring information of a third device; and the second device plays the ES.

Based on the foregoing method, the first device may directly extract the ES of the screen mirroring information, and transmit the ES to a peer end, thereby eliminating the time required for decoding, screen recording, and re-encoding, and greatly reducing an end-to-end latency of screen mirroring sharing. In addition, the method can improve image quality and viewing experience, and can prevent content not intended to be shared by a user from being transmitted to a peer end, thereby improving user experience.

In a possible design, first parameter information is negotiated, and the first parameter information is used by the first device and the second device to share the screen mirroring information in a call process. A negotiation process of the first parameter information may be initiated by the first device, or may be initiated by the second device. This is not limited in this application. In this way, the first device and the second device may subsequently implement screen mirroring sharing in the call process based on the first parameter information.

In a possible design, the first parameter information may include an audio channel and/or a video channel to be established by the first device and the second device to share the screen mirroring information. In this way, the first device and the second device may transmit the screen mirroring information through a channel other than a call connection channel, so that the first device and the second device can simultaneously implement call holding and screen mirroring sharing.

In a possible design, the screen mirroring information may include audio information and/or video information, and the ES includes an ES of the audio information and/ an ES of the video information.

In a possible design, the second device may receive the ES from the first device by using the following method: The second device may receive the ES of the audio information from the first device through a first audio channel, and/or receive the ES of the video information from the first device through a first video channel. The first audio channel is an audio channel corresponding to the call connection between the first device and the second device, and the first video channel is a video channel corresponding to the call connection between the first device and the second device. Alternatively, the second device may receive the ES of the audio information from the first device through a second audio channel, and/or receive the ES of the video information from the first device through a second video channel. The second audio channel is an audio channel used by the first device and the second device to share the screen mirroring information, and the second video channel is a video channel used by the first device and the second device to share the screen mirroring information. In this way, the second device may flexibly select, based on an actual situation, an appropriate manner to receive the ES from the first device.

In a possible design, the second device receives, from the first device, an original package time PTS corresponding to the ES. In this way, the screen mirroring information transmitted between the first device and the second device can be synchronized.

In a possible design, under a condition that a call connection is established between the first device and the second device, the second device and the first device interact to determine whether a first capability is possessed, and the first capability is supporting a channel corresponding to the call connection and supporting a channel other than the channel corresponding to the call connection. In this way, it may be subsequently determined, based on capabilities of the first device and the second device, whether it is necessary to negotiate the channel other than the channel corresponding to the call connection to transmit the screen mirroring information.

In a possible design, that the second device and the first device interact to determine whether the first capability is possessed may include: The second device receives a first identifier from the first device, and the first identifier indicates whether the first device has the first capability; and the second device sends a second identifier to the first device, and the second identifier indicates whether the second device has the first capability. In this way, whether the first device and the second device have the first capability can be accurately determined.

In a possible design, the first identifier is an indication for a quantity of supported channels, or the first identifier is a preset code corresponding to the first device; and the second identifier is an indication for a quantity of supported channels, or the second identifier is a preset code corresponding to the second device. In this way, whether the first device or the second device has the first capability can be flexibly indicated.

In a possible design, that the first parameter information is negotiated may include: The second device receives second parameter information from the first device, and the second parameter information is used by the third device to perform screen mirroring to the first device; and the first parameter information is negotiated based on the second parameter information. In this way, consistency between negotiated first parameter information and negotiated second parameter information can be improved.

According to a third aspect, this application further provides a communication apparatus. The communication apparatus may be applied to a first device, and the communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus may include a communication unit and a processing unit. These units may perform a function of the method in the first aspect or the possible design examples of the first aspect. Details are not described herein again.

In a possible design, a structure of the communication apparatus includes a processor, and optionally further includes a memory and/or a communication interface. The communication interface is configured to receive and send data, a message, or information, and is configured to communicate and interact with another device in a system. The processor is configured to support the communication apparatus in performing corresponding functions in the first aspect or the possible design examples of the first aspect. The memory is coupled to the processor, and stores program instructions and data that are necessary for the communication apparatus.

According to a fourth aspect, this application further provides a communication apparatus. The communication apparatus may be applied to a second device, and the communication apparatus has a function of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus may include a communication unit and a processing unit. These units may perform a function of the method in the second aspect or the possible design examples of the second aspect. Details are not described herein again.

In a possible design, a structure of the communication apparatus includes a processor, and optionally further includes a memory and/or a communication interface. The communication interface is configured to receive and send data, a message, or information, and is configured to communicate and interact with another device in a system. The processor is configured to support the communication apparatus in performing corresponding functions in the second aspect or the possible design examples of the second aspect. The memory is coupled to the processor, and stores program instructions and data that are necessary for the communication apparatus.

According to a fifth aspect, an embodiment of this application provides a system, and the system may include a first device, a second device, a third device, and the like. The first device is configured to implement the method in the first aspect or the possible design examples of the first aspect. The second device is configured to implement the method in the second aspect or the possible design examples of the second aspect.

According to a sixth aspect, an embodiment of this application provides a computer-readable storage medium. The computer-readable storage medium stores program instructions, and when the program instructions are run on a computer, the computer is enabled to perform the method in the first aspect and any possible design of the first aspect or in the second aspect and any possible design of the second aspect in embodiments of this application. For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product, including instructions. When the instructions are run on a computer, the method in the first aspect or any possible design of the first aspect, or the method in the second aspect or any possible design of the second aspect is performed.

According to an eighth aspect, this application further provides a chip, including a processor. The processor is coupled to a memory, and is configured to read and execute program instructions stored in the memory, to cause the chip to implement the method in the first aspect or any possible design of the first aspect, or the method in the second aspect or any possible design of the second aspect.

For each of the third aspect to the eighth aspect and technical effects that can be achieved in the aspect, refer to the foregoing descriptions of the technical effects that can be achieved in the first aspect, the possible solutions in the first aspect, the second aspect, or the possible solutions in the second aspect. Details are not described herein again.

### BRIEF DESCRIPTION OF DRAWINGS

FIG. 1 is a diagram of an architecture of a system according to this application;
FIG. 2 is a flowchart of a screen mirroring sharing method according to this application;
FIG. 3 is a diagram of a screen mirroring sharing scenario of a set-top box that supports multiple channels according to this application;
FIG. 4 is a diagram of a screen mirroring sharing effect according to this application;
FIG. 5A and FIG. 5B are a flowchart of an example of a screen mirroring sharing method according to this application;
FIG. 6 is a diagram of maintaining synchronization in a screen mirroring sharing method according to this application;
FIG. 7 is a diagram of a screen mirroring sharing scenario of a set-top box that does not support multiple channels according to this application;
FIG. 8A and FIG. 8B are a flowchart of an example of another screen mirroring sharing method according to this application;
FIG. 9 is a diagram of a procedure of prompting a user to perform screen mirroring again when a screen mirroring parameter is inconsistent with a shared screen mirroring parameter in a scenario in which multiple channels are supported according to this application;
FIG. 10 is a diagram of a procedure of prompting a user to perform screen mirroring again when a screen mirroring parameter is inconsistent with a shared screen mirroring parameter in a scenario in which a single channel is supported according to this application;
FIG. 11 is a flowchart of an example of a renegotiation procedure in which a screen mirroring parameter is inconsistent with a shared screen mirroring parameter according to this application;
FIG. 12A and FIG. 12B are a flowchart of an example of performing screen mirroring in another screen mirroring manner when a screen mirroring parameter is inconsistent with a shared screen mirroring parameter according to this application;
FIG. 13 is a diagram of a scenario in which call media renegotiation may be triggered by screen mirroring from a mobile phone to a first set-top box according to this application;
FIG. 14 shows an example of a procedure in which parameters are consistent when call media renegotiation may be triggered by screen mirroring from a mobile phone to a first set-top box according to this application;
FIG. 15A and FIG. 15B show an example of a procedure in which parameters are inconsistent when call media renegotiation may be triggered by screen mirroring from a mobile phone to a first set-top box according to this application;
FIG. 16 is a diagram of a structure of a communication apparatus according to this application; and
FIG. 17 is a diagram of a structure of a communication apparatus according to this application.

### DESCRIPTION OF EMBODIMENTS

The following further describes in detail this application with reference to accompanying drawings.

Embodiments of this application provide a screen mirroring sharing method and an apparatus, to implement screen mirroring sharing. The method and the apparatus in this application are based on a same technical concept. Because problem-resolving principles of the method and the apparatus are similar, mutual reference may be made to implementation of the apparatus and the method, and repeated parts are not described.

In the description of this application, words such as "first" and "second" are merely used for distinguishing between descriptions, and cannot be understood as an indication or implication of relative importance, or cannot be understood as an indication of implication of an order.

In the description of this application, "at least one (type)" means one or more (types), and "a plurality of (types)" means two or more (types). "At least one of the following items" or a similar expression thereof means any combination of these items, including any combination of singular items or plural items. For example, at least one of a, b, or c may indicate a, b, and c, a and b, a and c, b and c, or a, b, and c, where a, b, and c may be singular or plural.

In the description of this application, "and/or" describes an association relationship between associated objects, and indicates that three relationships may exist. For example, A and/or B may indicate the following cases: Only A exists, both A and B exist, and only B exists, where A and B may be singular or plural. "/" indicates "or". For example, a/b indicates a or b.

To describe the technical solutions in embodiments of this application more clearly, the following describes screen mirroring sharing method and an apparatus provided in embodiments of this application in detail with reference to the accompanying drawings.

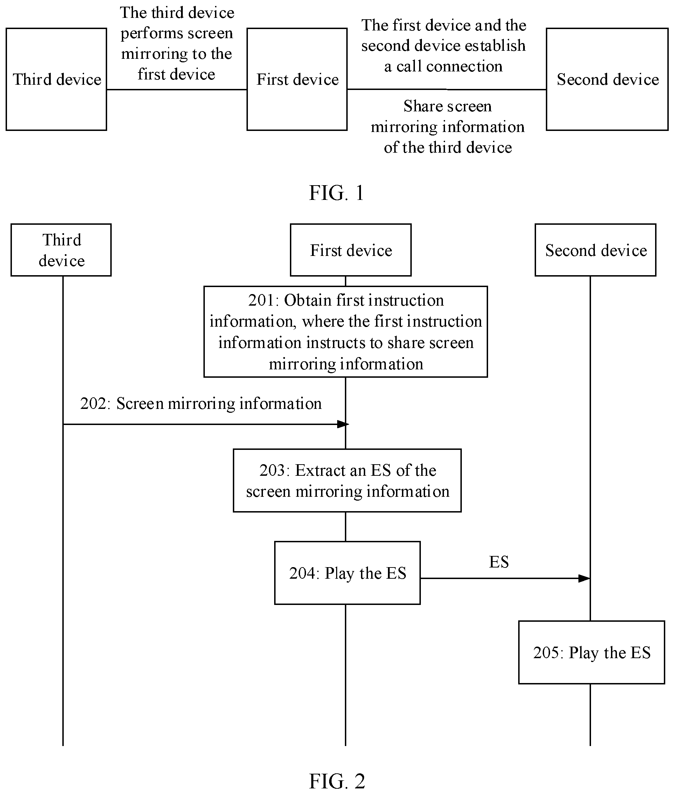

FIG. 1 shows an example of an architecture of a possible system to which a screen mirroring sharing method in this application is applicable. The architecture of the system may include a first device, a second device, and a third device. The first device and the second device may establish a call connection. Under a condition that the call connection is established between the first device and the second device, screen mirroring information from the third device to the first device may be shared with the second device. In other words, the third device is a screen mirroring source (source), and the first device is a screen mirroring sink (sink).

The first device, the second device, and the third device may be terminal devices. The first device and the second device may be terminal devices having a call function. The first device may be a terminal device having a screen mirroring function.

For example, the terminal device may also be referred to as user equipment (user equipment, UE), a mobile station (mobile station, MS), a mobile terminal (mobile terminal, MT), or the like, and is a device that provides a user with voice and/or data connectivity. For example, the terminal device may include a hand-held device or a vehicle-mounted device that has a wireless connection function. Currently, the terminal device may be a mobile phone (mobile phone), a tablet computer, a notebook computer, a palmtop computer, a PAD, a mobile internet device (mobile internet device, MID), a wearable device, a home smart screen, a set-top box, a virtual reality (virtual reality, VR) device, an augmented reality (augmented reality, AR) device, an extended reality (extended reality, XR) device, a mixed reality (mixed reality, MR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

The terminal device may also be a device-to-device (device-to-device, D2D) terminal device, a vehicle to everything (vehicle to everything, V2X) communication terminal device, a smart vehicle, a telematics box (or referred to as a car networking system) (telematics box, TBOX), a machine-to-machine/machine-type communications (machine-to-machine/machine-type communications, M2M/MTC) terminal device, or an internet of things (internet of things, IoT) terminal device.

It should be understood that, in the foregoing described examples of the terminal device, only some of the examples may be used as the first device, the second device, or the third device. In other words, the first device, the second device, or the third device may be some terminal devices in the foregoing terminal device examples. For example, the first device may be a set-top box, the second device may be a mobile phone, and the third device may be a mobile phone; or the first device may be a set-top box, the second device may be a set-top box, and the third device may be a PAD.

The set-top box may be a device integrated with a display screen, or may be a device independent of the display screen. When the set-top box is independent of the display screen, the set-top box is connected to the display screen to jointly implement a call or share screen mirroring information with another device.

Currently, screen capture recording is used for screen mirroring sharing. In this manner, screen mirroring data needs to be decoded, rendered, and encoded for screen recording, resulting in a long end-to-end data processing chain and a high latency. Re-encoding the rendered image causes video quality degradation. If a pop-up window that is not intended by the user appears in a screen recording area, content not intended to be shared by the user is transmitted to a peer end, causing poor user experience. Based on this, an embodiment of this application provides a screen mirroring sharing method. The first device may directly extract an elementary stream (elementary stream, ES) of the screen mirroring information, and transmit the ES to a peer end, thereby eliminating the time required for decoding, screen recording, and re-encoding, and greatly reducing an end-to-end latency of screen mirroring sharing. In addition, the method can improve image quality and viewing experience, and can prevent content not intended to be shared by a user from being transmitted to a peer end, thereby improving user experience.

Based on the foregoing descriptions, an embodiment of this application provides a screen mirroring sharing method. Refer to FIG. 2. The method may include the following steps.

Step 201: Under a condition that a call connection is established between a first device and a second device, the first device obtains first instruction information, where the first instruction information instructs to share screen mirroring information.

In some embodiments, the first device may be a set-top box, the second device is a call peer end of the first device, the second device may be a set-top box, a mobile phone, or the like, and a third device may be a mobile phone, a PAD, or the like that performs screen mirroring to the first device. Optionally, the first device and the third device may correspond to a same user.

Certainly, the foregoing is merely an example, and is not intended to limit this application.

The call connection may be understood as a connection including a video call and a voice call.

The first device or the second device may call the other party, to establish a call connection between the first device and the second device. In some embodiments, when a call connection is established between when the first device and the second device, the first device and the second device may interact to determine whether a first capability is possessed, and the first capability is supporting a channel corresponding to the call connection and supporting a channel other than the channel corresponding to the call connection.

Optionally, whether the first device and the second device have the first capability may also be understood as whether the first device and the second device support multiple channels. Supporting multiple channels indicates that more than one video channel and more than one audio channel are supported. To be specific, channels corresponding to the call connection include one video channel and one audio channel. If the first device and the second device support multiple channels (in other words, have the first capability), the first device and the second device may support at least one video channel and/or at least one audio channel in addition to the call connection.

If the first device and the second device do not support multiple channels (in other words, do not have the first capability), it may be understood that the first device and the second device support a single channel; in other words, the first device and the second device support only one video channel and one audio channel.

In an optional implementation, the first device and the second device may interact, by using the following method, to determine whether the first capability is possessed: The first device sends a first identifier to the second device, where the first identifier indicates whether the first device has the first capability; and the first device receives a second identifier from the second device, where the second identifier indicates whether the second device has the first capability. The first identifier or the second identifier may also be understood as an identifier indicating whether multiple channels are supported.

For example, the first identifier may be an indication for a quantity of supported channels, or the first identifier may be a preset code corresponding to the first device; and the second identifier is an indication for a quantity of supported channels, or the second identifier is a preset code corresponding to the second device.

The preset code may be used to determine whether the device has the first capability (that is, whether the device supports multiple channels). Optionally, the preset code corresponding to the first device may be a called number corresponding to the first device, or the like, for example, a communication number allocated by an operator. For example, a communication number of the first device may be an area code plus an A-digit fixed number, where the area code is a code of an area in which the first device is located, and A is a positive integer, for example, A may be 8. This is not limited in this application. The preset code corresponding to the second device may be a called number corresponding to the second device, or the like, for example, a communication number allocated by an operator. For example, a communication number of the second device may be an area code plus a B-digit fixed number, where the area code is a code of an area in which the second device is located, and B is a positive integer, for example, B may be 8. This is not limited in this application.

In a possible manner, the first device may also directly determine, in a form of the number (namely, a form of the number of the second device herein) called by the first device, whether the second device has the first capability. The second device may also directly determine, in a form of a number (namely, a form of the number of the first device herein) called by the second device, whether the first device has the first capability.

The foregoing interaction under a condition that the call connection is established between the first device and the second device may be understood as call media negotiation performed by the first device and the second device. It should be understood that during the call media negotiation, the first device and the second device may further negotiate another call parameter and the like in addition to interaction of whether the first capability is possessed. This is not limited in this application.

Further, after a call initiated by the first device or the second device is successful, the first device and the second device establish the call connection, and a call video stream and/or a call audio stream may be transmitted between the first device and the second device.

In some embodiments, the first device may obtain the first instruction information in the following two manners.

Manner a1: The user of the first device may trigger the first instruction information by using the first device, so that the first device obtains the first instruction information.

For example, the user of the first device may trigger a screen mirroring sharing function by using a user interface corresponding to the first device, that is, trigger the first instruction information.

The user interface corresponding to the first device may be displayed on a display screen of the first device, or may be displayed on a display screen connected to the first device.

Manner a2: The third device initiates screen mirroring to the first device, to trigger the first instruction information, so that the first device obtains the first instruction information.

In the manner a2, when the user of the third device wants to share content with a user of the second device, the user may initiate screen mirroring to the first device by using the third device, to trigger the first instruction information.

Step 202: The first device receives the screen mirroring information from the third device based on the first instruction information; and correspondingly, the third device sends the screen mirroring information to the first device.

In some embodiments, before the first device receives the screen mirroring information from the third device, the first device and the second device may negotiate first parameter information. The first parameter information is used by the first device and the second device to share the screen mirroring information in a call process. A negotiation process of the first parameter information may be initiated by the first device, or may be initiated by the second device. This is not limited in this application.

It should be understood that negotiation described in this application is a process in which two devices exchange information, and a specific negotiation process is not limited in this application. In a negotiation process of the two devices, an initiating device of the negotiation process is not limited in this application. In other words, either of the two devices may initiate the negotiation process.

The foregoing process of negotiating the first parameter information may also be understood as shared screen mirroring media negotiation, or may be understood as call media renegotiation.

In a possible implementation, when the first device and the second device support multiple channels, the first parameter information may include an audio channel and/or a video channel to be established by the first device and the second device to share the screen mirroring information. In other words, when the first device and the second device support multiple channels, the first device and the second device may negotiate a channel other than a channel included in the call connection, to transmit mirrored content and content of a current call through different channels.

Optionally, a preset parameter or a common screen mirroring parameter may be used as a media parameter of the audio channel and/or the video channel used for sharing the screen mirroring information.

In some possible manners, when the first device and the second device do not support multiple channels, the first device and the second device may directly reuse the channel included in the call connection as the audio channel and/or the video channel used for sharing the screen mirroring information. Therefore, the first device and the second device may not negotiate the first parameter information.

Optionally, when the first device and the second device do not support multiple channels, if the first device or the second device predetermines that a screen mirroring parameter is inconsistent with a current call parameter, the first parameter information may be negotiated. The first parameter information may include the common screen mirroring parameter or the preset parameter.

In some embodiments, before the first device receives the screen mirroring information from the third device, the first device and the third device may negotiate second parameter information. The second parameter information is used by the third device to perform screen mirroring to the first device. A negotiation process of the second parameter information may be initiated by the first device, or may be initiated by the third device. This is not limited in this application.

The foregoing process of negotiating the second parameter information may be understood as screen mirroring media negotiation.

Optionally, the second parameter information may include an encoding format, a resolution, and the like.

In an optional implementation, before the first device receives the screen mirroring information from the third device, the first device determines whether the first parameter information is consistent with the second parameter information; and if the first parameter information is consistent with the second parameter information, the first device sends a screen mirroring indication to the third device; or if the first parameter information is inconsistent with the second parameter information, the first device and the second device renegotiate the first parameter information, the first device and the third device renegotiate the second parameter information, and after determining that renegotiated first parameter information is consistent with renegotiated second information, the first device sends a screen mirroring indication to the third device.

Optionally, when the first device determines that the first parameter is inconsistent with the second parameter information, the first device may record parameter information supported by the third device.

In an example, if the first device records the parameter information (may be understood as the second parameter information) supported by the third device, the first device may negotiate or renegotiate the first parameter information with the second device based on the second parameter information.

In some embodiments, the screen mirroring information includes audio information and/or video information. Correspondingly, that the third device sends the screen mirroring information to the first device may be that the third device sends the audio information (or referred to as an audio stream) and/or the video information (or referred to as a video stream) to the first device.

Step 203: The first device extracts an ES of the screen mirroring information.

Because the screen mirroring information includes the audio information and/or the video information, that the first device extracts the ES of the screen mirroring information may be that the first device extracts an ES of the audio information and/ an ES of the video information.

For example, the ES may be encoded data such as video H264/H265 or advanced audio coding (advanced audio coding, AAC) of audio.

Step 204: The first device plays the ES, and sends the ES to the second device.

In some embodiments, that the first device plays the ES may be that the first device plays the ES on the first device. In some other embodiments, that the first device plays the ES may be that the ES is downloaded from some applications (application, APP) to the first device for playing. In some other embodiments, that the first device plays the ES may also be that the first device plays the ES by using an APP of the first device. Certainly, there may be another playing case. This is not limited in this application. In this application, playing by another device is similar, and details are not described in the following embodiments of this application.

In some embodiments, that the first device sends the ES to the second device may include the following two cases.

Case b1: The first device sends the ES of the audio information to the second device through a first audio channel, and/or sends the ES of the video information to the second device through a first video channel.

The first audio channel is an audio channel corresponding to the call connection between the first device and the second device, and the first video channel is a video channel corresponding to the call connection between the first device and the second device.

In the case b1, the first device and the second device do not have the first capability (that is, do not support multiple channels, and support only a single channel), and the first device and the second device reuse a channel of the call connection to transmit the screen mirroring information.

Case b2: The first device sends the ES of the audio information to the second device through a second audio channel, and/or sends the ES of the video information to the second device through a second video channel.

The second audio channel is an audio channel established by the first device and the second device to share the screen mirroring information, and the second video channel is a video channel established by the first device and the second device to share the screen mirroring information.

In the case b2, the first device and the second device have the first capability (that is, support multiple channels), and the first device and the second device may transmit the screen mirroring information through a channel used for sharing the screen mirroring information other than the channel of the call connection.

In an optional implementation, the first device may further extract an original package time (package time, PTS) corresponding to the ES of the screen mirroring information; and the first device records the PTS, and sends the PTS to the second device. In this way, the PTS may be used as a timestamp corresponding to the screen mirroring information, to maintain synchronization of the screen mirroring information between the first device and the second device.

For example, the first device may extract a PTS corresponding to the ES of the audio information and/or a PTS corresponding to the ES of the video information, and send the PTS corresponding to the ES of the audio information and/or the PTS corresponding to the ES of the video information to the second device.

In some embodiments, the first device may package the ES of the audio information and the PTS corresponding to the ES of the audio information together for sending, or may separately send the ES of the audio information and the PTS corresponding to the ES of the audio information. This is the same for the video information. This is not limited in this application.

Step 205: The second device plays the ES.

Based on the foregoing screen mirroring sharing method, the first device may directly extract the ES of the screen mirroring information, and transmit the ES to a peer end, thereby eliminating the time required for decoding, screen recording, and re-encoding, and greatly reducing an end-to-end latency of screen mirroring sharing. In addition, the method can improve image quality and viewing experience, and can prevent content not intended to be shared by a user from being transmitted to a peer end, thereby improving user experience.

In some embodiments, if the first parameter information is inconsistent with the second information, to ensure successful screen mirroring sharing, the first device may also start a common screen recording or transcoding procedure. A case in which the first parameter information is inconsistent with the second information may be a negotiation inconsistency or a renegotiation inconsistency. This is not limited in this application.

Based on the foregoing embodiments, the following describes in detail the screen mirroring sharing method provided in embodiments of this application by using specific scenarios and examples. It should be understood that the following example is merely an example for description, and is not intended to limit this application. In the following scenarios and examples, an example in which a first device is a set-top box (a first set-top box is used as an example below), a second device is a set-top box (a second set-top box is used as an example below), and a third device is a mobile phone is used for description.

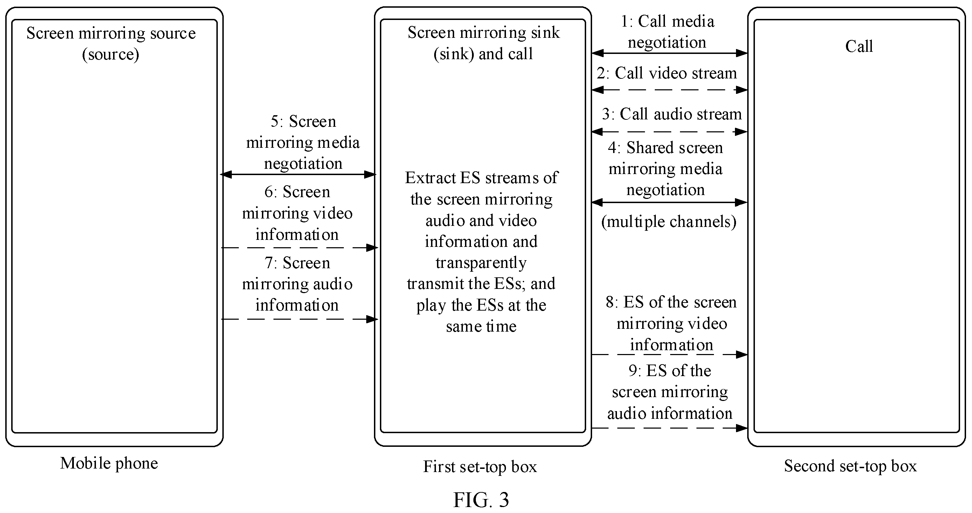

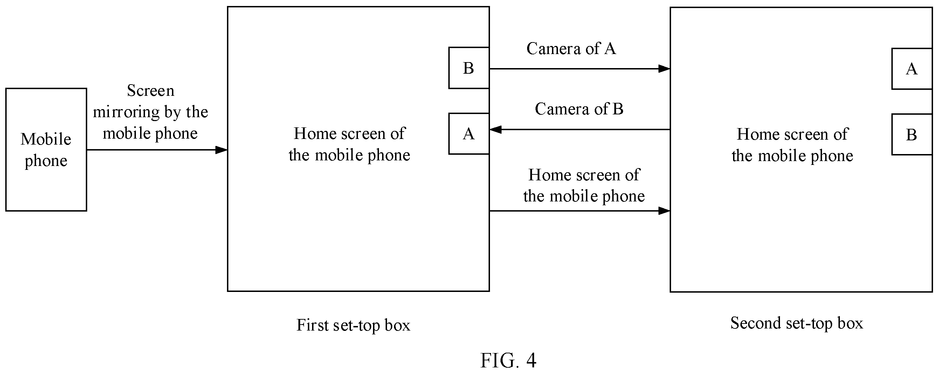

For example, FIG. 3 shows a screen mirroring sharing scenario of a set-top box that supports multiple channels. When a call connection is established between a first set-top box and a second set-top box and a user triggers a screen mirroring sharing call, the first set-top box and the second set-top box perform shared screen mirroring media negotiation, to obtain, through negotiation, multiple channels used for sharing screen mirroring information, audio and video media parameters (for example, a parameter corresponding to a highest resolution on a call side), and the like. A mobile phone initiates screen mirroring to the first set-top box, and the first set-top box and the mobile phone perform screen mirroring media negotiation. A parameter obtained through the foregoing shared screen mirroring media negotiation is used as a screen mirroring parameter. Subsequently, the mobile phone may send screen mirroring information to the first set-top box, and the first set-top box extracts ES streams of screen mirroring audio and video information, plays the ESs at the same time, and transmits the ESs to the second set-top box at a peer end through corresponding channels respectively. In this way, a screen recording and encoding step after screen stream decoding and rendering of screen mirroring may be omitted, and an end-to-end (end-to-end, E2E) latency is reduced. A screen of the first set-top box and call audio and video streams may be transmitted to the second set-top box through multiple channels, as shown in FIG. 4. In this way, the following effects can be achieved: Through ES transparent transmission and 4-channel transmission (the screen mirroring information and the call audio and video), a home screen shared by the mobile phone, an image shot by a camera of the first set-top box, and an image shot by a camera of the second set-top box may be simultaneously displayed, and the second set-top box side at the call peer end can hear a screen mirroring audio stream and a call audio stream at the same time, with clear image quality and low latency. In FIG. 4, A and B represent a user of a first set-top box and a user of a second set-top box.

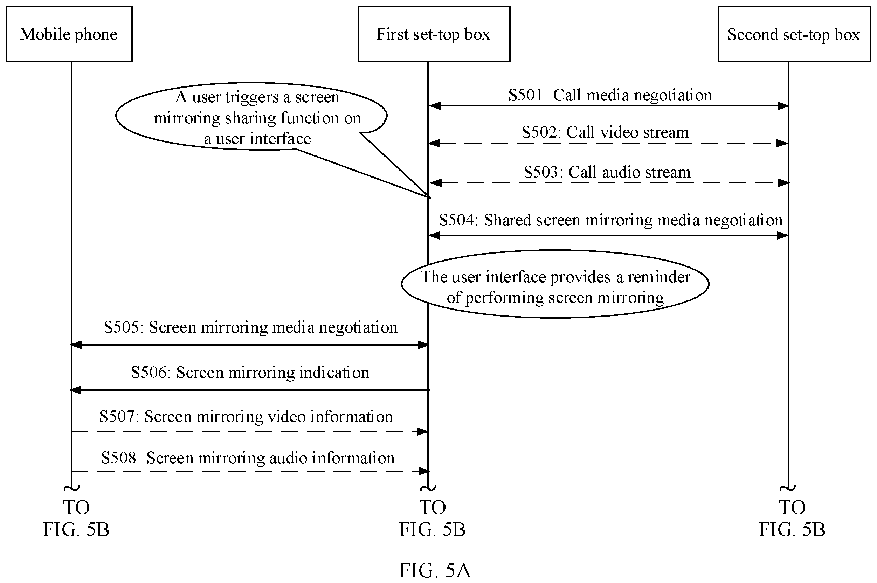

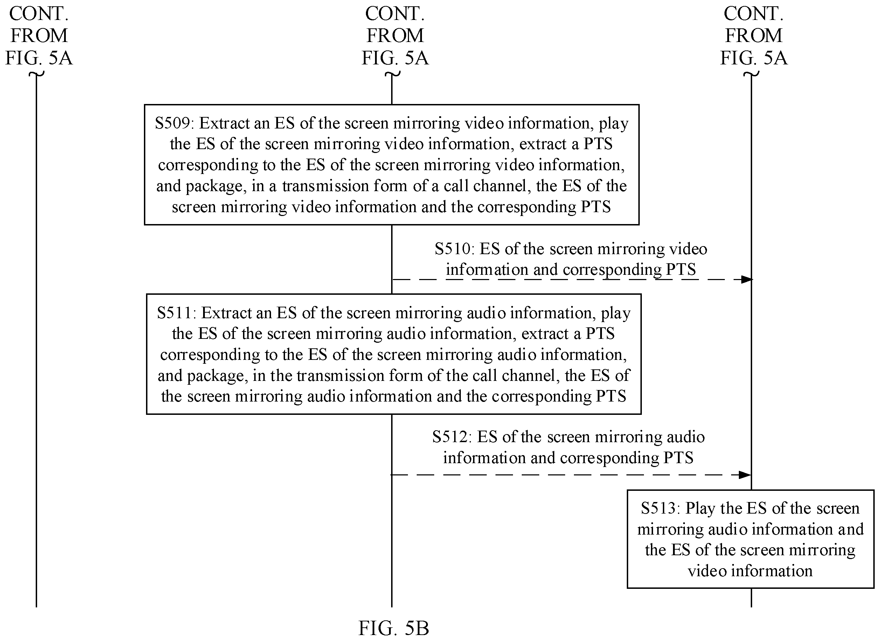

Based on the scenario shown in FIG. 3, FIG. 5A and FIG. 5B show an example of a screen mirroring sharing method. A procedure of the example may include the following steps.

S501: A user of a first set-top box or a user of a second set-top box makes a call, and the first set-top box and the second set-top box perform call media negotiation.

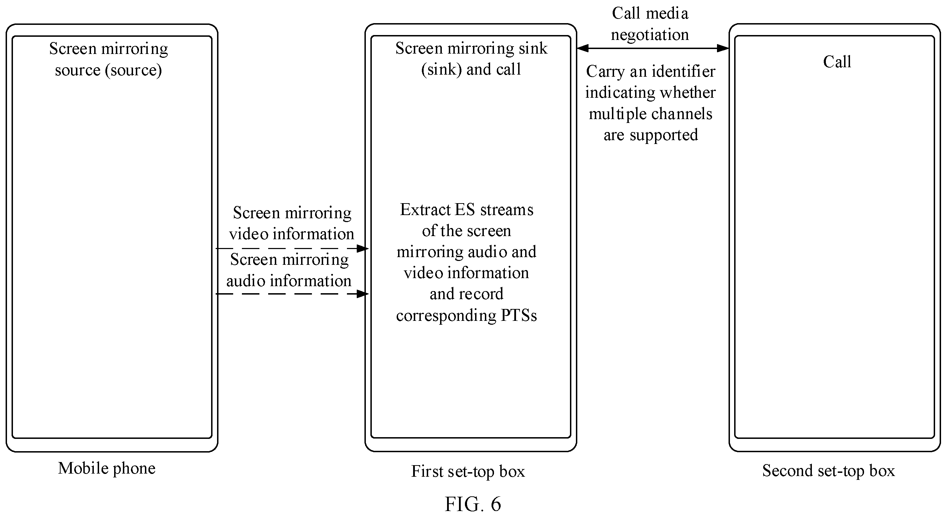

As shown in FIG. 6, in a call media negotiation message, the first set-top box and the second set-top box may separately carry an identifier indicating whether multiple channels are supported, to determine, based on the identifier, whether the multiple channels are supported (more than one video channel and more than one audio channel are supported); or determine, in a number form of the call, whether the multiple channels are supported.

For example, for the identifier indicating whether multiple channels are supported, refer to related descriptions of the first identifier and the second identifier described in the foregoing embodiment. Details are not described herein again.

In this example, the first set-top box and the second set-top box support the multiple channels.

S502: After the call is successful, a call video stream is transmitted between the first set-top box and the second set-top box.

S503: After the call is successful, a call audio stream is transmitted between the first set-top box and the second set-top box.

It should be understood that a sequence of S502 and S503 is merely an example. This is not limited in this application.

S504: The user of the first set-top box triggers a screen mirroring sharing function on a user interface corresponding to the first set-top box; and the first set-top box and the second set-top box perform shared screen mirroring media negotiation (or referred to as call media renegotiation).

During the shared screen mirroring media negotiation, the first set-top box and the second set-top box may negotiate to add an audio channel and/or a video channel needed for sharing screen mirroring information, and a preset parameter or a common screen mirroring parameter may be used as a media parameter of the audio channel and/or the video channel.

After the shared screen mirroring media negotiation is completed, the user interface of the first set-top box may be adjusted to a to-be-mirrored image, to prompt the user to initiate screen mirroring.

S505: A user of a mobile phone initiates screen mirroring by using the mobile phone; and the mobile phone and the first set-top box may perform screen mirroring media negotiation.

For example, the user may initiate screen mirroring (for example, wireless screen mirroring, (miracast) or Cast+ (Cast+ is a screen mirroring protocol)) by using the mobile phone.

Optionally, a main media parameter used in the process of the screen mirroring media negotiation may be a parameter (such as an encoding format and a resolution) negotiated by the first set-top box and the second set-top box in the process of the shared screen mirroring media negotiation.

S506: When the screen mirroring media negotiation succeeds, the first set-top box sends a screen mirroring indication to the mobile phone, to notify the mobile phone that screen mirroring information (such as audio information and video information) can be transmitted.

S507: The mobile phone transmits screen mirroring video information to the first set-top box.

For example, the screen mirroring video information may be a screen video stream of the mobile phone.

S508: The mobile phone transmits screen mirroring audio information to the first set-top box.

For example, the screen mirroring audio information may be a screen audio stream of the mobile phone.

It should be understood that a sequence of S507 and S508 is merely an example. This is not limited in this application.

S509: The first set-top box extracts an ES of the screen mirroring video information, plays the ES of the screen mirroring video information, extracts a PTS corresponding to the ES of the screen mirroring video information, and packages, in a transmission form of a call channel, the ES of the screen mirroring video information and the corresponding PTS.

Optionally, the first set-top box may also extract other original data including the ES of the screen mirroring video information, such as a packetized elementary stream (packetized elementary stream, PES) and a transport stream (transport stream, TS).

S510: The first set-top box sends, to the second set-top box, the ES of the screen mirroring video information and the corresponding PTS that are packaged in the transmission form of the call channel.

The first set-top box sends the ES of the screen mirroring video information and the corresponding PTS through a negotiated video channel used for sharing the screen mirroring information.

S511: The first set-top box extracts an ES of the screen mirroring audio information, plays the ES of the screen mirroring audio information, extracts a PTS corresponding to the ES of the screen mirroring audio information, and packages, in the transmission form of the call channel, the ES of the screen mirroring audio information and the corresponding PTS.

Optionally, the first set-top box may also extract other original data including the ES of the screen mirroring audio information, such as a PES and a TS.

S512: The first set-top box sends, to the second set-top box, the ES of the screen mirroring audio information and the corresponding PTS that are packaged in the transmission form of the call channel.

The first set-top box sends the ES of the screen mirroring audio information and the corresponding PTS through a negotiated audio channel used for sharing the screen mirroring information.

During execution of S509 and S511, in other words, during operations of the first set-top box shown in FIG. 6, when the first set-top box extracts the ES of the screen mirroring audio information and the ES of the screen mirroring video information, the first set-top box records the corresponding PTSs, and packages the corresponding PTSs into transmission packets of the channels used for sharing the screen mirroring information. The PTSs serve as timestamps of source data, so that the screen mirroring information can be synchronized between the first set-top box and the second set-top box.

It should be understood that a sequence of S509 and S510 and S511 and S512 is merely an example. This is not limited in this application.

S513: The second set-top box plays the ES of the screen mirroring audio information and the ES of the screen mirroring video information.

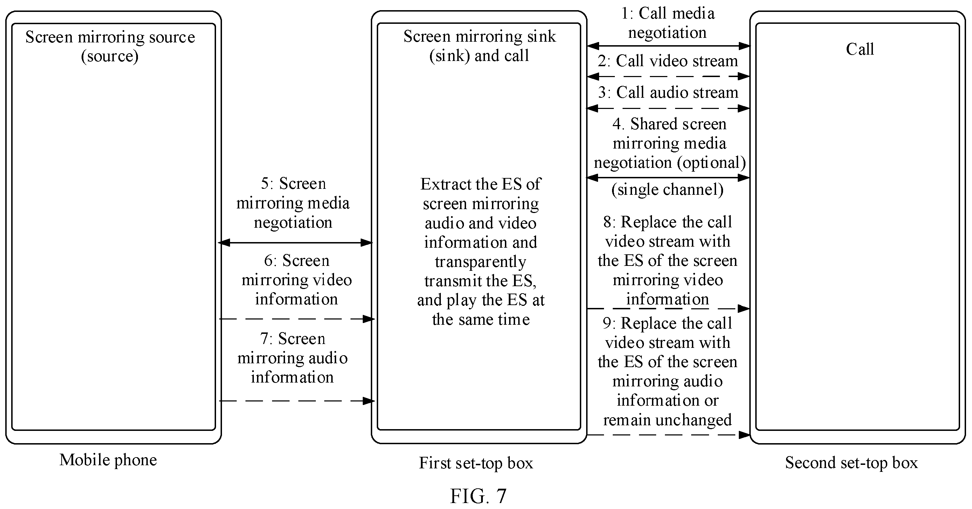

For example, FIG. 7 shows a screen mirroring sharing scenario of a set-top box that does not support multiple channels. Under a condition that a call connection is established between a first set-top box and a second set-top box, the first set-top box and the second set-top box may directly reuse or renegotiate (predetermine that a screen mirroring parameter is inconsistent with a call parameter, and initiate negotiation in advance) a channel of the call connection. The first set-top box may send, to the second set-top box, screen mirroring audio and video streams, or a screen mirroring video stream and a call audio stream.

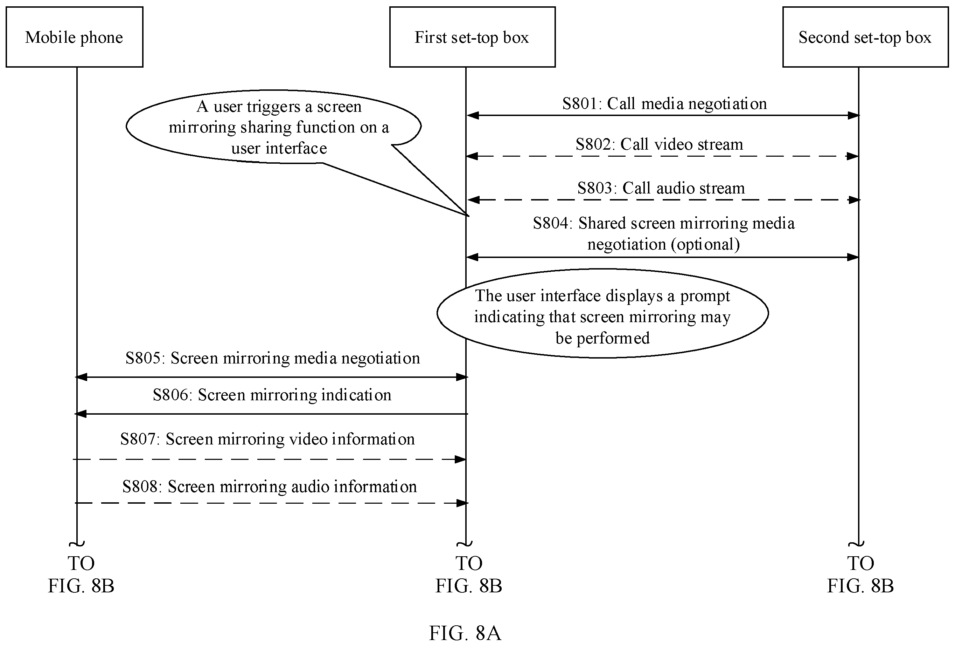

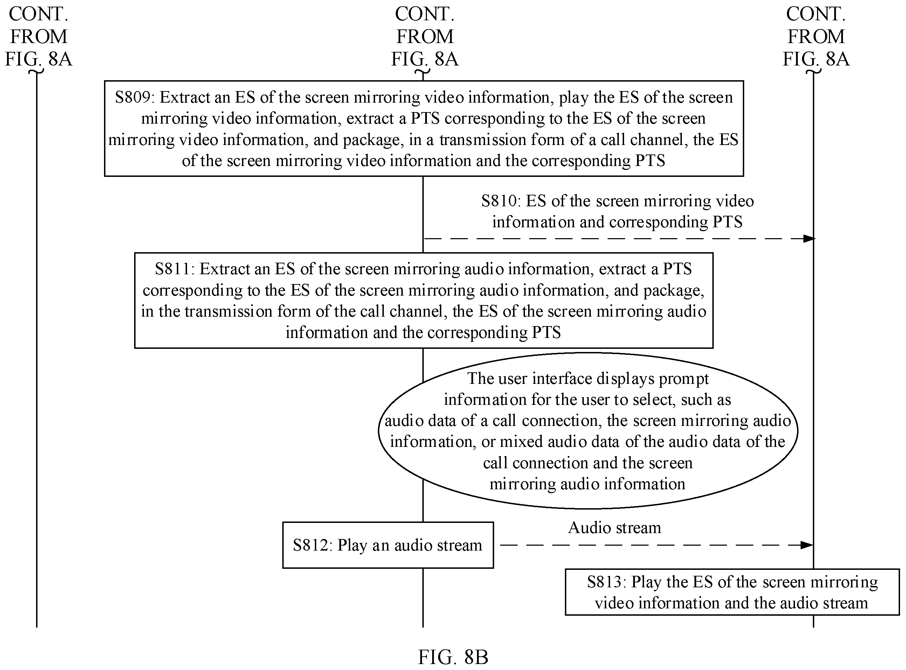

Based on the scenario shown in FIG. 7, FIG. 8A and FIG. 8B show an example of a screen mirroring sharing method. A procedure of the example may include the following steps.

S801 is similar to S501, and mutual reference may be made. Details are not described herein again. Different from S501, in S801, a determined result may be that a first set-top box may support multiple channels, and a second set-top box does not support multiple channels, that is, the second set-top box supports a single channel. Alternatively, neither the first set-top box nor the second set-top box supports multiple channels.

S802 and S803 are similar to S502 and S503, and mutual reference may be made. Details are not described herein again.

S804: A user of the first set-top box triggers a screen mirroring sharing function on a user interface corresponding to the first set-top box; and the first set-top box and the second set-top box determine that a channel of a call connection can be directly reused. Optionally, as shown in S804 in FIG. 8A, the first set-top box and the second set-top box perform shared screen mirroring media negotiation (or referred to as call media renegotiation).

Optionally, when the first set-top box or the second set-top box may predetermine that a screen mirroring parameter is inconsistent with a call parameter, the first set-top box or the second set-top box may perform a procedure of the shared screen mirroring media negotiation. For example, the first set-top box and the second set-top box may initiate the shared screen mirroring media negotiation by using a common screen mirroring parameter.

After the shared screen mirroring media negotiation is completed, or when it is determined that a direct reuse manner is used, the user interface of the first set-top box may be adjusted to a to-be-mirrored image, to prompt the user to initiate screen mirroring.

S805 to S808 are similar to S505 to S508, and mutual reference may be made. Details are not described herein again.

S809: The first set-top box extracts an ES of screen mirroring video information, plays the ES of the screen mirroring video information, extracts a PTS corresponding to the ES of the screen mirroring video information, and packages, in a transmission form of a call channel, the ES of the screen mirroring video information and the corresponding PTS.

Optionally, the first set-top box may also extract other original data including the ES of the screen mirroring video information, such as a PES and a TS.

S810: The first set-top box sends, to the second set-top box, the ES of the screen mirroring video information and the corresponding PTS that are packaged in the transmission form of the call channel.

The first set-top box sends the ES of the screen mirroring video information and the corresponding PTS through a reused video channel of the call connection.

S811: The first set-top box extracts an ES of screen mirroring audio information, extracts a PTS corresponding to the ES of the screen mirroring audio information, and packages, in the transmission form of the call channel, the ES of the screen mirroring audio information and the corresponding PTS.

Optionally, the first set-top box may also extract other original data including the ES of the screen mirroring audio information, such as a PES and a TS.

S812: The first set-top box plays an audio stream, and sends the audio stream to the second set-top box. The audio stream may include the ES of the screen mirroring audio information and the corresponding PTS that are packaged in the transmission form of the call channel, or the audio stream may include audio data of the call connection, or the audio stream may include mixed audio data of the ES of the screen mirroring audio information and the audio data of the call connection.

Optionally, the user interface of the first set-top box may display prompt information for the user to select, the prompt information may include the audio data of the call connection, the screen mirroring audio information, or the mixed audio data of the audio data of the call connection and the screen mirroring audio information, and the first set-top box may determine specific content of the audio stream based on a selection instruction of the user.

The first set-top box sends the audio stream through a reused audio channel of the call connection.

S813: The second set-top box plays the ES of the screen mirroring video information and the audio stream.

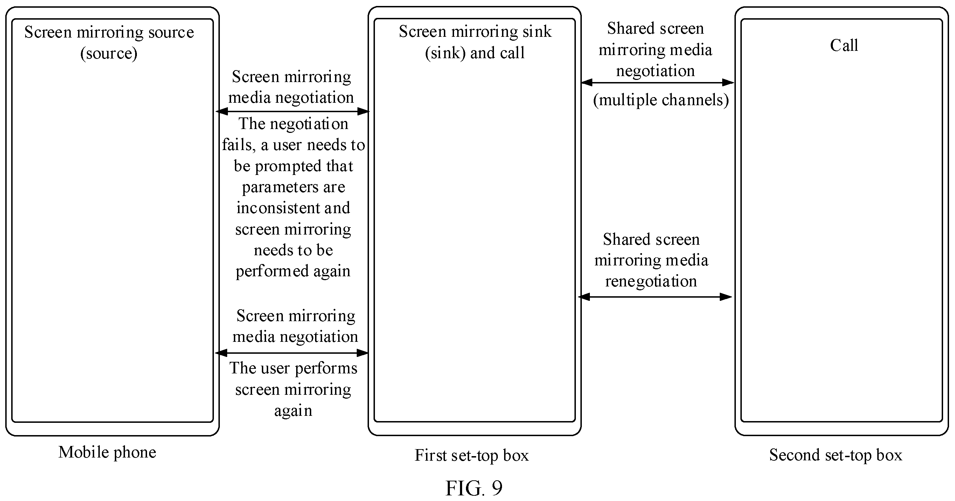

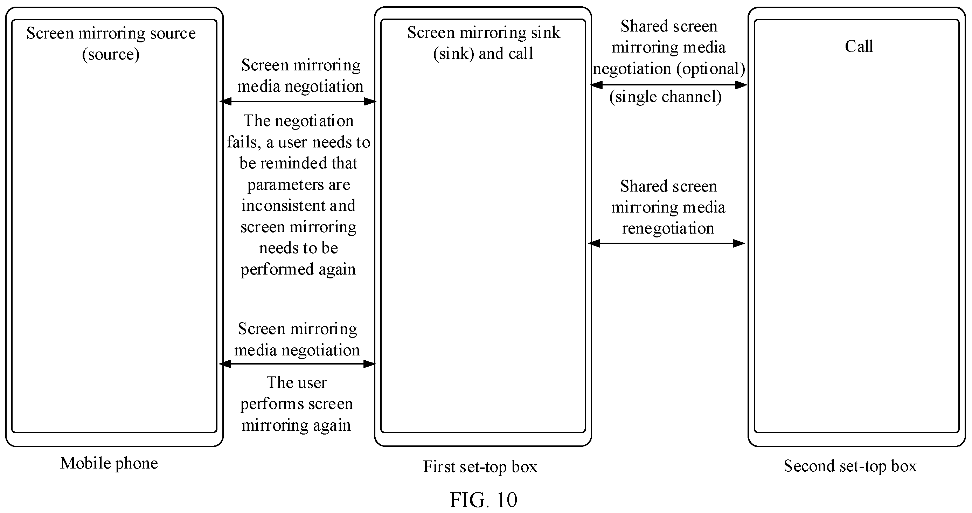

In some embodiments, parameters (such as an encoding format and resolution information) used by the mobile phone and the set-top box may be negotiated to be consistent. However, a call media parameter (namely, a shared screen mirroring parameter) (that is, the first parameter information in the foregoing description) that is negotiated by the first set-top box and the second set-top box to share screen mirroring information may be inconsistent with the screen mirroring parameter (that is, the second parameter information in the foregoing description) negotiated by the first set-top box and the mobile phone. FIG. 9 is a diagram of a procedure of prompting a user to perform screen mirroring again when a screen mirroring parameter is inconsistent with a shared screen mirroring parameter in a scenario in which a first set-top box and a second set-top box support multiple channels. In a scenario in which multiple channels are supported, shared screen mirroring media negotiation is first completed. The first set-top box performs screen mirroring negotiation with the mobile phone based on a negotiated shared screen mirroring media parameter. If parameters are inconsistent, the negotiation fails, and the user needs to be prompted that the parameters are inconsistent and screen mirroring needs to be performed again. The first set-top box may record a parameter supported by the mobile phone, and perform shared screen mirroring media renegotiation based on the parameter supported by the mobile phone. After the negotiation is completed, the user is prompted that a status is ready (ready), and the user performs screen mirroring again, to complete screen mirroring media negotiation. FIG. 10 is a diagram of a procedure of prompting a user to perform screen mirroring again when a screen mirroring parameter is inconsistent with a shared screen mirroring parameter in a scenario in which a first set-top box and a second set-top box support a single channel. In a scenario in which a single channel is supported, compared with a scenario in which multiple channels are supported, a channel of a call connection may be reused as a channel used for sharing screen mirroring information. Therefore, it is optional to perform shared screen mirroring media negotiation before screen mirroring (when it is predetermined that a screen mirroring parameter is inconsistent with a call parameter, negotiation can be initiated in advance). Other procedures are consistent with those in the scenario in which multiple channels are supported.

The following describes, by using different examples, possible cases after parameters are inconsistent.

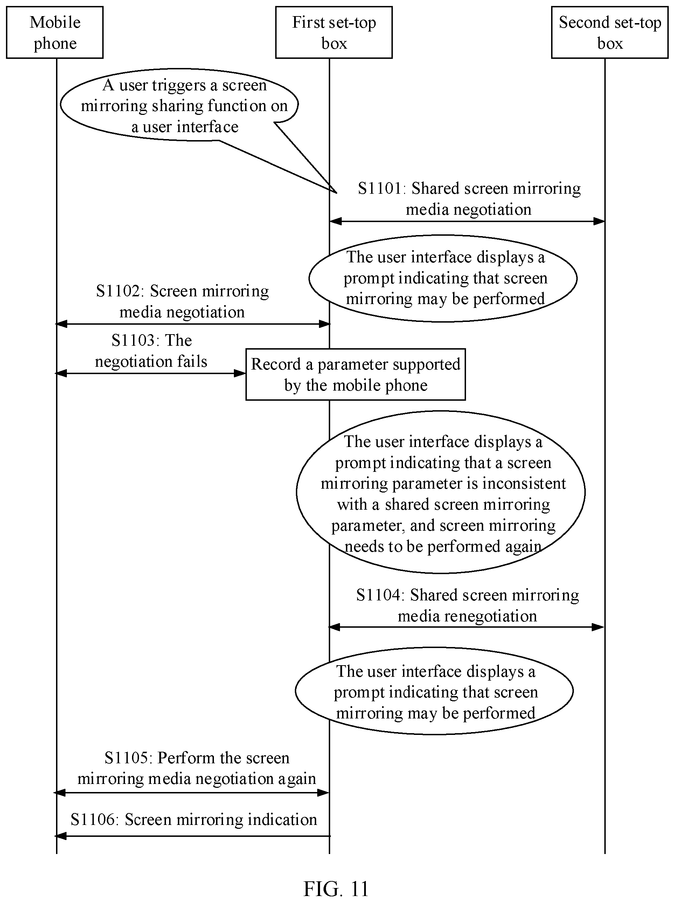

FIG. 11 shows an example of a renegotiation procedure when a screen mirroring parameter is inconsistent with a shared screen mirroring parameter. The procedure of the example may include the following steps.

S1101: A user of a first set-top box triggers a screen mirroring sharing function on a user interface corresponding to the first set-top box; and the first set-top box and a second set-top box perform shared screen mirroring media negotiation (or referred to as call media renegotiation); or in a single-channel scenario, the first set-top box and the second set-top box reuse a call channel.

In FIG. 11, S1101 shows an example in which the first set-top box and the second set-top box perform the shared screen mirroring media negotiation.

For specific content of the shared screen mirroring media negotiation, refer to related descriptions in the foregoing embodiments. Details are not described herein again.

S1102: A user of a mobile phone initiates screen mirroring by using the mobile phone; and the mobile phone and the first set-top box may perform screen mirroring media negotiation.

For example, the user may initiate screen mirroring (for example, miracast or Cast+) by using the mobile phone.

Optionally, a main media parameter used during the screen mirroring media negotiation may be a parameter (such as an encoding format and a resolution) negotiated by the first set-top box and the second set-top box during the shared screen mirroring media negotiation.

S1103: The mobile phone and the first set-top box unsuccessfully perform the screen mirroring media negotiation, that is, parameter negotiation fails. The first set-top box records a parameter supported by the mobile phone.

The user interface corresponding to the first set-top box may prompt the user that a screen mirroring parameter is inconsistent with a shared screen mirroring parameter, and screen mirroring needs to be performed again.

S1104: The first set-top box and the second set-top box may perform shared media renegotiation (namely, call media renegotiation).

The first set-top box and the second set-top box may perform the renegotiation based on the parameter supported by the mobile phone.

After the shared media renegotiation is successful, the user interface of the first set-top box may prompt the user to perform screen mirroring.

S1105: The first set-top box and the mobile phone perform the screen mirroring media negotiation again, and a parameter of the screen mirroring media negotiation that is performed again is consistent with a parameter of shared screen mirroring media renegotiation (for example, encoding formats and resolutions are consistent).

S1106: The first set-top box and the mobile phone successfully perform the screen mirroring media negotiation again, and the first set-top box may send a screen mirroring indication to the mobile phone, to notify the mobile phone that screen mirroring audio and video information can be transmitted.

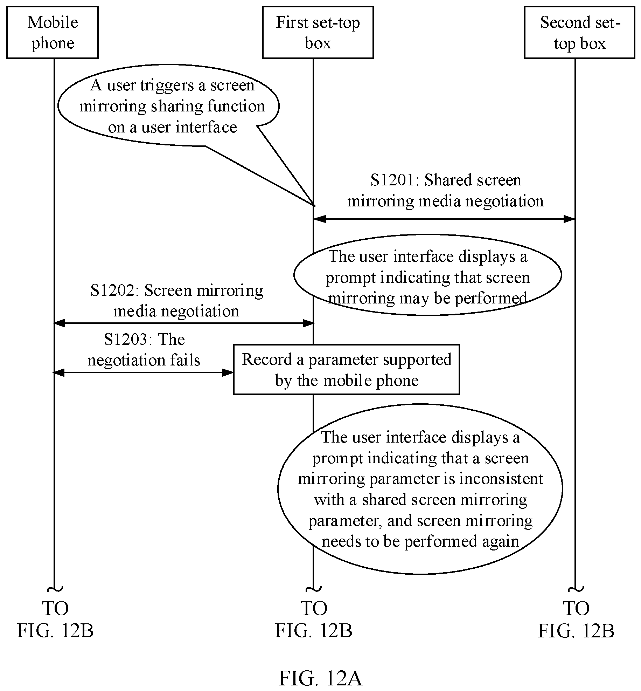

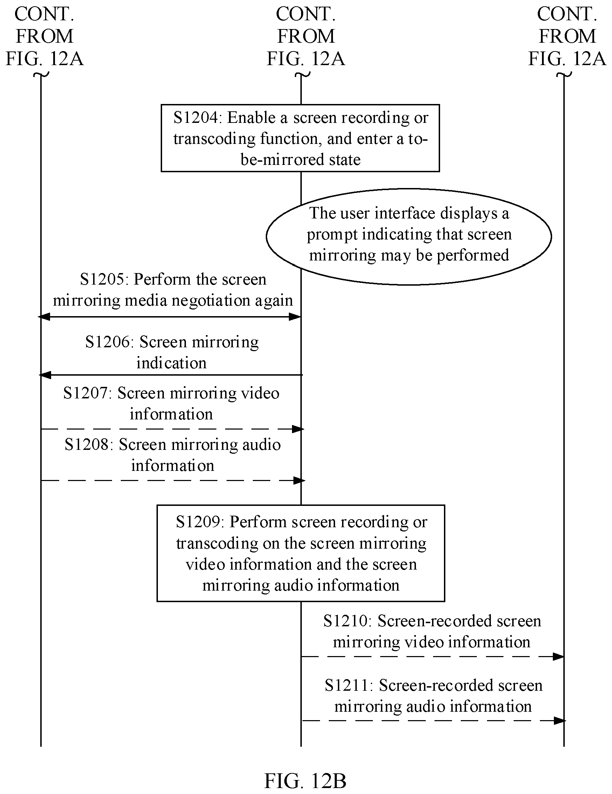

FIG. 12A and FIG. 12B are a flowchart of an example of performing screen mirroring in another screen mirroring manner when a screen mirroring parameter is inconsistent with a shared screen mirroring parameter. A procedure of the example may include the following steps.

S1201 to S1203 are similar to S1101 to S1103, and mutual reference may be made. Details are not described herein again.

S1204: A first set-top box determines that a parameter supported by a mobile phone is incompatible with a parameter (that is, a shared screen mirroring parameter) supported by a call media, enables a screen recording or transcoding function, and enters a to-be-mirrored state; and a user interface of the first set-top box may prompt the user to perform screen mirroring.

S1205: A user of the mobile phone initiates screen mirroring by using the mobile phone; and the mobile phone and the first set-top box may perform screen mirroring media negotiation again.

For example, the user may initiate screen mirroring (for example, miracast or Cast+) by using the mobile phone.

It should be understood, for the screen mirroring media negotiation in S1205, refer to a negotiation process of a screen mirroring scenario in a current screen recording or transcoding function. Details are not described herein again.

S1206: The mobile phone and the first set-top box successfully perform the screen mirroring media negotiation; and the first set-top box may send a screen mirroring indication to the mobile phone, to notify the mobile phone that screen mirroring information (for example, audio information and video information) can be transmitted.

S1207: The mobile phone transmits screen mirroring video information to the first set-top box.

For example, the screen mirroring video information may be a screen video stream of the mobile phone.

S1208: The mobile phone transmits screen mirroring audio information to the first set-top box.

For example, the screen mirroring audio information may be a screen audio stream of the mobile phone.

It should be understood that a sequence of S1207 and S1208 is merely an example. This is not limited in this application.

S1209: The first set-top box performs screen recording or transcoding on the screen mirroring video information and the screen mirroring audio information.

S1210: The first set-top box packages screen-recorded (or transcoded) screen mirroring video information in a transmission form of a call channel, and sends packaged screen-recorded (or transcoded) screen mirroring video information to the second set-top box.

S1211: The first set-top box packages screen-recorded (or transcoded) screen mirroring audio information in the transmission form of the call channel, and sends packaged screen-recorded (or transcoded) screen mirroring audio information to the second set-top box.

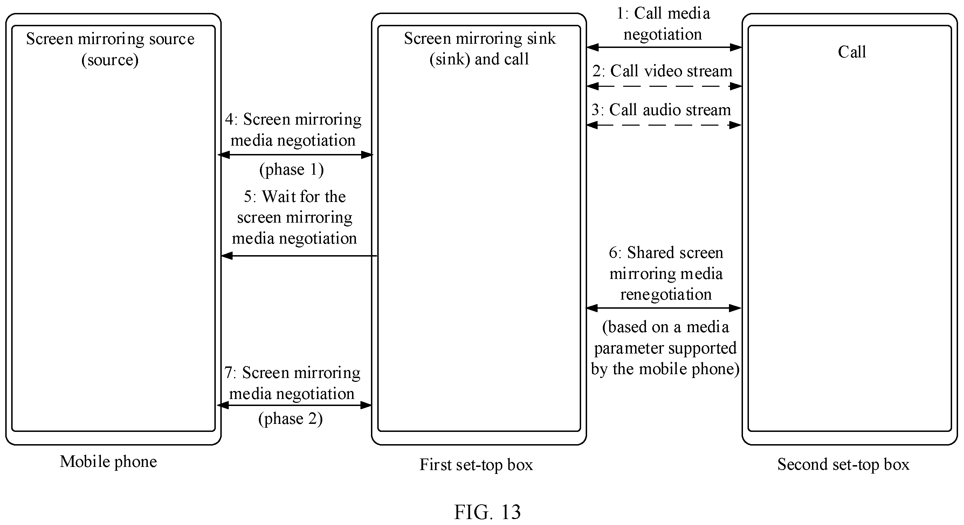

In some embodiments, screen mirroring from the mobile phone to the first set-top box may trigger call media renegotiation (that is, shared screen mirroring media negotiation). As illustrated in a scenario shown in FIG. 13, a user initiates screen mirroring by using a mobile phone. The mobile phone and a first set-top box perform screen mirroring media negotiation, and carry a media parameter (such as an encoding format and a resolution). The first set-top box temporarily does not respond with a supported media parameter, and indicates the mobile phone to wait for the screen mirroring media negotiation. The first set-top box performs call media renegotiation (that is, shared screen mirroring media negotiation) based on the media parameter supported by the mobile phone. After the negotiation is completed, the first set-top box returns a supported media parameter to the mobile phone, and a remaining procedure of the screen mirroring media negotiation is completed, as shown in a procedure of a phase 2 in the figure.

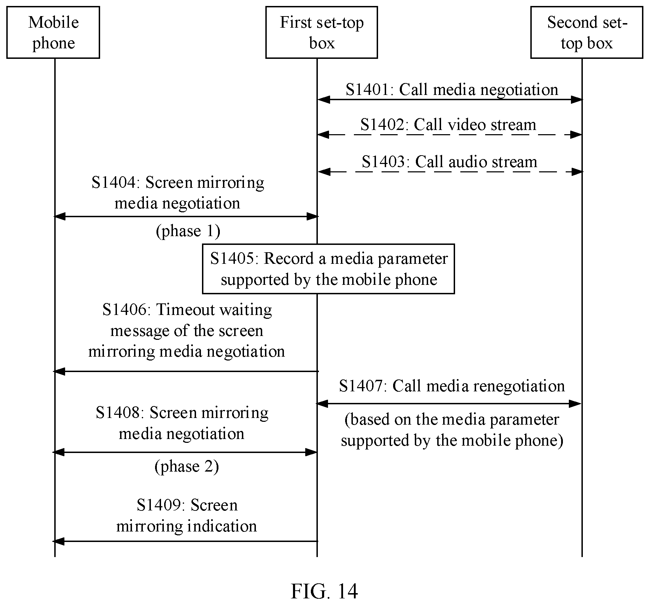

Based on the scenario shown in FIG. 13, FIG. 14 shows an example of a procedure in which parameters are consistent when call media renegotiation may be triggered by screen mirroring from a mobile phone to a first set-top box. The procedure of the example may include the following steps.

S1401 to S1403 are similar to S501 to S503, and mutual reference may be made. Details are not described herein again.

S1404: A user of a mobile phone initiates screen mirroring by using a mobile phone; and the mobile phone and a first set-top box perform screen mirroring media negotiation. In this case, the screen mirroring media negotiation performed by the mobile phone and the first set-top box is designated as a phase 1 of a procedure of the screen mirroring media negotiation.

For example, the user may initiate screen mirroring (for example, miracast or Cast+) by using the mobile phone.

Optionally, the mobile phone and the first set-top box may perform the screen mirroring media negotiation based on a media parameter such as an encoding format and a resolution.

In the phase 1 of the procedure of the screen mirroring media negotiation, the first set-top box temporarily does not respond with a supported media parameter temporarily, and waits for negotiation.

S1405: The first set-top box records the media parameter supported by the mobile phone.

S1406: The first set-top box sends a timeout waiting message of the screen mirroring media negotiation to the mobile phone, to enable the mobile phone to wait for a reply of the first set-top box.

S1406 is an optional step.

S1407: The first set-top box and the second set-top box perform call media renegotiation (that is, shared screen mirroring media negotiation) based on the media parameter supported by the mobile phone.

Optionally, when the first set-top box and the second set-top box support multiple channels, a new channel needs to be negotiated; and when the first set-top box and the second set-top box support a single channel, if a screen mirroring parameter and a call parameter are consistent, the screen mirroring parameter and the call parameter may be directly reused; or if the screen mirroring parameter and the call parameter are inconsistent, the screen mirroring parameter and the call parameter need to be renegotiated.

S1408: The first set-top box returns the supported media parameter to the mobile phone, and the mobile phone and the first set-top box complete a remaining procedure of the screen mirroring media negotiation. In this case, the screen mirroring media negotiation performed by the mobile phone and the first set-top box is designated as a phase 2 of the procedure of the screen mirroring media negotiation.

S1409: The mobile phone and the first set-top box successfully perform the screen mirroring media negotiation, and the first set-top box may send a screen mirroring indication to the mobile phone, to notify the mobile phone that screen mirroring information (for example, audio information and video information) can be transmitted.

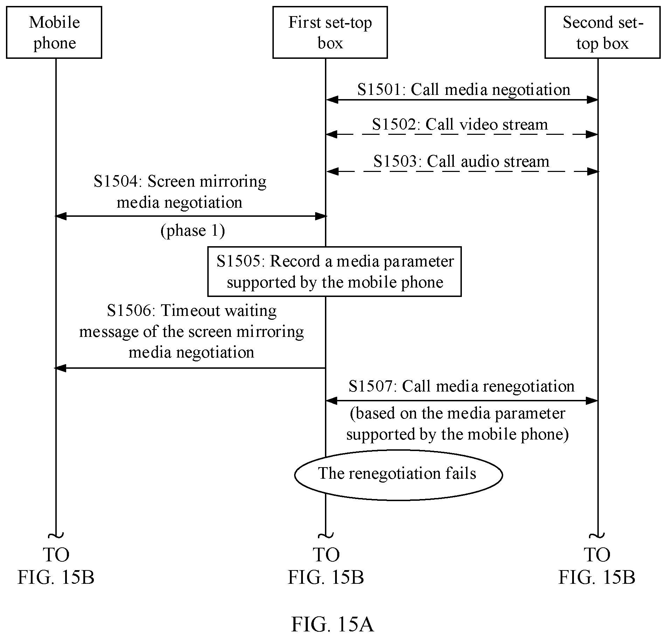

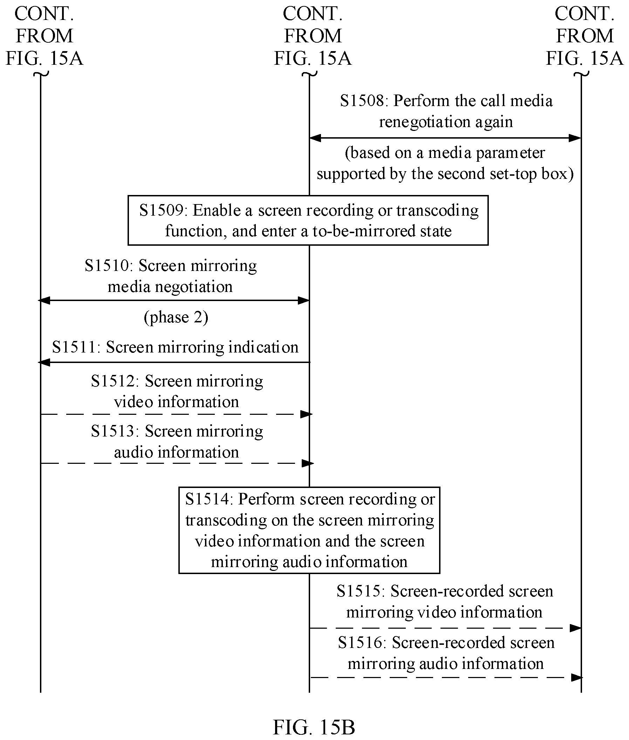

Based on the scenario shown in FIG. 13, FIG. 15A and FIG. 15B show an example of a procedure in which parameters are inconsistent when call media renegotiation may be triggered by screen mirroring from a mobile phone to a first set-top box. The procedure of the example may include the following steps.

S1501 to S1506 are similar to S1401 to S1406, and mutual reference may be made. Details are not described herein again.

S1507: A first set-top box and a second set-top box perform call media renegotiation (that is, shared screen mirroring media negotiation) based on a media parameter supported by a mobile phone, and the renegotiation fails, that is, a screen mirroring parameter is inconsistent with a shared screen mirroring parameter.

S1508: The first set-top box and the second set-top box perform the call media renegotiation again based on a media parameter supported by the second set-top box, and the negotiation succeeds.

S1509: The first set-top box enables a screen recording or transcoding function, and enters a to-be-mirrored state.

S1510: The first set-top box sends a supported media parameter to the mobile phone; and the mobile phone and the first set-top box complete a remaining procedure of the screen mirroring media negotiation. In this case, the screen mirroring media negotiation performed by the mobile phone and the first set-top box is designated as a phase 2 of a procedure of the screen mirroring media negotiation.

S1511: When the screen mirroring media negotiation succeeds, the first set-top box sends a screen mirroring indication to the mobile phone, to notify the mobile phone that screen mirroring information (such as audio information and video information) can be transmitted.

S1512: The mobile phone transmits screen mirroring video information to the first set-top box.

For example, the screen mirroring video information may be a screen video stream of the mobile phone.

S1513: The mobile phone transmits screen mirroring audio information to the first set-top box.

For example, the screen mirroring audio information may be a screen audio stream of the mobile phone.

It should be understood that a sequence of S1512 and S1513 is merely an example. This is not limited in this application.

S1514: The first set-top box performs screen recording or transcoding on the screen mirroring video information and the screen mirroring audio information.

S1515: The first set-top box packages screen-recorded (or transcoded) screen mirroring video information in a transmission form of a call channel, and sends packaged screen-recorded (or transcoded) screen mirroring video information to the second set-top box.

S1516: The first set-top box packages screen-recorded (or transcoded) screen mirroring audio information in the transmission form of the call channel, and sends packaged screen-recorded (or transcoded) screen mirroring audio information to the second set-top box.

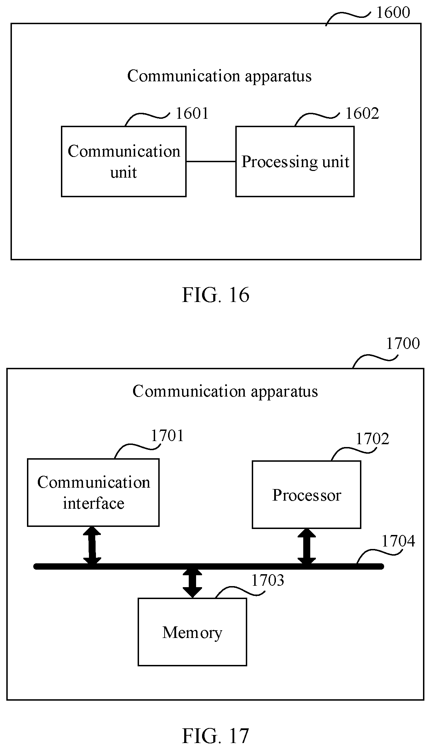

Based on the foregoing embodiments, an embodiment of this application further provides a communication apparatus. As shown in FIG. 16, a communication apparatus 1600 may include a communication unit 1601 and a processing unit 1602. The communication unit 1601 is used by the communication apparatus 1600 for communication, for example, receiving information (a message or data) or sending information (a message or data), and the processing unit 1602 is configured to control and manage an action of the communication apparatus 1600. The processing unit 1602 may further control a step performed by the communication unit 1601.

For example, the communication apparatus 1600 may be specifically the first device in the foregoing embodiments, or a processor, a chip, a chip system, a functional module, or the like in the first device. Alternatively, the communication apparatus 1600 may be specifically the second device in the foregoing embodiments, or a processor, a chip, a chip system, a functional module, or the like in the second device.

In an embodiment, when the communication apparatus 1600 is configured to implement a function of the first device in the foregoing embodiments, the communication unit 1601 may be configured to: under a condition that a call connection is established between the first device and the second device, obtain first instruction information, and the first instruction information instructs to share screen mirroring information; and receive, based on the first instruction information, the screen mirroring information from the third device. The processing unit 1602 may be configured to extract an elementary stream ES of the screen mirroring information, and play the ES. The communication unit 1601 may be further configured to send the ES to the second device.

In an optional implementation, the processing unit 1602 may be further configured to negotiate first parameter information, and the first parameter information is used by the first device and the second device to share the screen mirroring information in a call process.

For example, the first parameter information includes an audio channel and/or a video channel to be established by the first device and the second device to share the screen mirroring information.

In an optional implementation, the processing unit 1602 may be further configured to negotiate second parameter information, and the second parameter information is used by the third device to perform screen mirroring to the first device.

In some embodiments, the screen mirroring information includes audio information and/or video information. Further, when extracting the ES of the screen mirroring information, the processing unit 1602 may be configured to extract the ES of the audio information and/ the ES of the video information.

In a possible manner, when sending the ES to the second device, the communication unit 1601 may be configured to send the ES of the audio information to the second device through a first audio channel, and/or send the ES of the video information to the second device through a first video channel; the first audio channel is an audio channel corresponding to the call connection between the first device and the second device, and the first video channel is a video channel corresponding to the call connection between the first device and the second device; or
send the ES of the audio information to the second device through a second audio channel, and/or send the ES of the video information to the second device through a second video channel; the second audio channel is an audio channel established by the first device and the second device to share the screen mirroring information, and the second video channel is a video channel established by the first device and the second device to share the screen mirroring information.

Optionally, the processing unit 1602 may be further configured to extract an original package time PTS corresponding to the ES of the screen mirroring information, and record the PTS; and the communication unit 1601 may be further configured to send the PTS to the second device.

In some embodiments, when a call connection is established between the first device and the second device, the communication unit 1601 may be further configured to interact with the second device to determine whether a first capability is possessed, and the first capability is supporting a channel corresponding to the call connection and supporting a channel other than the channel corresponding to the call connection.

In an example, the communication unit 1601 may be further configured to send a first identifier to the second device, and the first identifier indicates whether the first device has the first capability; and receive a second identifier from the second device, and the second identifier indicates whether the second device has the first capability.

Optionally, the first identifier is an indication for a quantity of supported channels, or the first identifier is a preset code corresponding to the first device; and the second identifier is an indication for a quantity of supported channels, or the second identifier is a preset code corresponding to the second device.

In an optional implementation, before the communication unit 1601 receives the screen mirroring information from the third device, the processing unit 1602 may be further configured to determine whether the first parameter information is consistent with the second parameter information; the first parameter information is used by the first device and the second device to share the screen mirroring information in the call process; and the second parameter information is used by the third device to perform screen mirroring to the first device; and
if the first parameter information is consistent with the second parameter information, the communication unit 1601 is controlled to send a screen mirroring indication to the third device; or
if the first parameter information is inconsistent with the second parameter information, the first parameter information is renegotiated and the second parameter information is renegotiated, and after determining that renegotiated first parameter information is consistent with renegotiated second information, the communication unit 1601 is controlled to send a screen mirroring indication to the third device.

In some embodiments, when it is determined that the first parameter is inconsistent with the second parameter information, the processing unit 1602 may be further configured to record parameter information supported by the third device.

Optionally, when the first parameter information is negotiated, the processing unit 1602 may be configured to negotiate the first parameter information based on the second parameter information, and the second parameter information is used by the third device to perform screen mirroring to the first device.

In still another embodiment, when the communication apparatus 1600 is configured to implement a function of the second device in the foregoing embodiments, and under a condition that a call connection is established between the first device and the second device, the communication unit 1601 may be configured to receive the elementary stream ES from the first device, and the ES is extracted based on the screen mirroring information of the third device; and the processing unit 1602 may be configured to play the ES.

In an optional implementation, the processing unit 1602 may be further configured to negotiate the first parameter information, and the first parameter information is used by the first device and the second device to share the screen mirroring information in a call process.

For example, the first parameter information includes the audio channel and/or the video channel to be established by the first device and the second device to share the screen mirroring information.

Optionally, the screen mirroring information includes the audio information and/or the video information; and the ES includes the ES of the audio information and/ the ES of the video information.

In some embodiments, when receiving the ES from the first device, the communication unit 1601 may be configured to receive the ES of the audio information from the first device through a first audio channel, and/or receive the ES of the video information from the first device through a first video channel; the first audio channel is an audio channel corresponding to the call connection between the first device and the second device, and the first video channel is a video channel corresponding to the call connection between the first device and the second device; or
receive the ES of the audio information from the first device through a second audio channel, and/or receive the ES of the video information from the first device through a second video channel, the second audio channel is an audio channel established by the first device and the second device to share the screen mirroring information, and the second video channel is a video channel established by the first device and the second device to share the screen mirroring information.

In a possible manner, the communication unit 1601 may be further configured to receive, from the first device, the original package time PTS corresponding to the ES.

In some embodiments, under a condition that a call connection is established between the first device and the second device, the communication unit 1601 may be further configured to interact with the first device to determine whether the first capability is possessed, and the first capability is supporting a channel corresponding to the call connection and supporting a channel other than the channel corresponding to the call connection.

In an example, the communication unit 1601 may be further configured to receive the first identifier from the first device, and the first identifier indicates whether the first device has the first capability; and send the second identifier to the first device, and the second identifier indicates whether the second device has the first capability.

For example, the first identifier is the indication for the quantity of supported channels, or the first identifier is the preset code corresponding to the first device; and the second identifier is the indication for the quantity of supported channels, or the second identifier is the preset code corresponding to the second device.

Optionally, the communication unit 1601 may be further configured to receive the second parameter information from the first device, and the second parameter information is used by the third device to perform screen mirroring to the first device. When negotiating the first parameter information, the processing unit 1602 may be configured to negotiate the first parameter information based on the second parameter information.

It should be noted that, in this embodiment of this application, division into the units is an example, and is merely a logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. As shown in FIG. 17, a communication apparatus 1700 may include a processor 1702. Optionally, the communication apparatus 1700 may further include a communication interface 1701. Optionally, the communication apparatus 1700 may further include a memory 1703. The memory 1703 may be disposed inside the communication apparatus 1700, or may be disposed outside the communication apparatus 1700. The processor 1702 may control the communication interface 1701 to receive and send information, a message, data, or the like.

Specifically, the processor 1702 may be a central processing unit (central processing unit, CPU), a network processor (network processor, NP), or a combination of a CPU and an NP. The processor 1702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communication interface 1701, the processor 1702, and the memory 1703 are connected to each other. Optionally, the communication interface 1701, the processor 1702, and the memory 1703 are connected to each other through a bus 1704. The bus 1704 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 17, but this does not mean that there is only one bus or only one type of bus.

In an optional implementation, the memory 1703 is configured to store a program and the like. Specifically, the program may include program code, and the program code includes computer operation instructions. The memory 1703 may include a RAM, and may further include a non-volatile memory (non-volatile memory), for example, one or more magnetic disk memories. The processor 1702 executes an application program stored in the memory 1703 to implement the foregoing functions and functions of the communication apparatus 1700.

For example, the communication apparatus 1700 may be the first device in the foregoing embodiments, or may be the second device in the foregoing embodiments.

In an embodiment, when the communication apparatus 1700 implements a function of the first device in the foregoing method embodiments, the communication interface 1701 may implement receiving and sending operations performed by the first device in the foregoing method embodiments; and the processor 1702 may implement an operation other than the receiving and sending operations performed by the first device in the foregoing method embodiments. Specifically, for related specific descriptions, refer to related descriptions in the foregoing embodiments. Details are not described herein again.

In another embodiment, when the communication apparatus 1700 implements a function of the second device in the foregoing method embodiments, the communication interface 1701 may implement receiving and sending operations performed by the second device in the foregoing method embodiments; and the processor 1702 may implement an operation other than the receiving and sending operations performed by the second device in the foregoing method embodiments. Specifically, for related specific descriptions, refer to related descriptions in the foregoing embodiments. Details are not described herein again.

According to the foregoing embodiment, an embodiment of this application provides a system. The system may include the first device, the second device, the third device, and the like described in the foregoing embodiments.

An embodiment of this application further provides a computer-readable storage medium. The computer-readable storage medium is configured to store a computer program. When the computer program is executed by a computer, the computer may implement the screen mirroring sharing method provided in the foregoing method embodiments.

An embodiment of this application further provides a computer program product. The computer program product is configured to store a computer program. When the computer program is executed by a computer, the computer may implement the screen mirroring sharing method provided in the foregoing method embodiments.

An embodiment of this application further provides a chip, including a processor. The processor is coupled to a memory, and is configured to invoke a program in the memory, to cause the chip to implement the screen mirroring sharing method provided in the foregoing method embodiments.

An embodiment of this application further provides a chip. The chip is coupled to a memory, and the chip is configured to implement the screen mirroring sharing method provided in the foregoing method embodiments.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A screen mirroring sharing method, comprising:
under a condition that a call connection is established between a first device and a second device, obtaining, by the first device, first instruction information, wherein the first instruction information instructs to share screen mirroring information;
receiving, by the first device, the screen mirroring information from a third device based on the first instruction information, and extracting an elementary stream ES of the screen mirroring information; and
playing, by the first device, the ES, and sending the ES to the second device.

2. The method according to claim 1, wherein the method further comprises:
negotiating first parameter information, wherein the first parameter information is used by the first device and the second device to share the screen mirroring information in a call process.

3. The method according to claim 2, wherein the first parameter information comprises an audio channel and/or a video channel to be established by the first device and the second device to share the screen mirroring information.

4. The method according to any one of claims 1 to 3, wherein the method further comprises:
negotiating second parameter information, wherein the second parameter information is used by the third device to perform screen mirroring to the first device.

5. The method according to any one of claims 1 to 4, wherein the screen mirroring information comprises audio information and/or video information; and
the extracting, by the first device, the ES of the screen mirroring information comprises:
extracting, by the first device, an ES of the audio information and/ an ES of the video information.

6. The method according to claim 5, wherein the sending, by the first device, the ES to the second device comprises:
sending, by the first device, the ES of the audio information to the second device through a first audio channel, and/or sending the ES of the video information to the second device through a first video channel, wherein the first audio channel is an audio channel corresponding to the call connection between the first device and the second device, and the first video channel is a video channel corresponding to the call connection between the first device and the second device; or
sending, by the first device, the ES of the audio information to the second device through a second audio channel, and/or sending the ES of the video information to the second device through a second video channel, wherein the second audio channel is an audio channel established by the first device and the second device to share the screen mirroring information, and the second video channel is a video channel established by the first device and the second device to share the screen mirroring information.

7. The method according to any one of claims 1 to 6, wherein the method further comprises:
extracting, by the first device, an original package time PTS corresponding to the ES of the screen mirroring information; and
recording, by the first device, the PTS, and sending the PTS to the second device.

8. The method according to any one of claims 1 to 7, wherein the method further comprises:
under the condition that the call connection is established between the first device and the second device, interacting, by the first device, with the second device to determine whether a first capability is possessed, wherein the first capability is supporting a channel corresponding to the call connection and supporting a channel other than the channel corresponding to the call connection.

9. The method according to claim 8, wherein the interacting, by the first device, with the second device to determine whether the first capability is possessed comprises:
sending, by the first device, a first identifier to the second device, wherein the first identifier indicates whether the first device has the first capability; and
receiving, by the first device, a second identifier from the second device, wherein the second identifier indicates whether the second device has the first capability.

10. The method according to claim 9, wherein the first identifier is an indication for a quantity of supported channels, or the first identifier is a preset code corresponding to the first device; and
the second identifier is an indication for a quantity of supported channels, or the second identifier is a preset code corresponding to the second device.

11. The method according to any one of claims 1 to 10, wherein before the receiving, by the first device, the screen mirroring information from the third device, the method further comprises:
determining, by the first device, whether the first parameter information is consistent with the second parameter information, wherein the first parameter information is used by the first device and the second device to share the screen mirroring information in the call process, and the second parameter information is used by the third device to perform screen mirroring to the first device; and
if the first parameter information is consistent with the second parameter information, sending, by the first device, a screen mirroring indication to the third device; or
if the first parameter information is inconsistent with the second parameter information, renegotiating the first parameter information and renegotiating the second parameter information, and after determining that renegotiated first parameter information is consistent with renegotiated second information, sending, by the first device, a screen mirroring indication to the third device.

12. The method according to claim 11, wherein the method further comprises:
when the first device determines that the first parameter is inconsistent with the second parameter information, recording, by the first device, parameter information supported by the third device.

13. The method according to any one of claims 2 to 4 and claims 11 and 12, wherein the negotiating the first parameter information comprises:
negotiating the first parameter information based on the second parameter information, wherein the second parameter information is used by the third device to perform screen mirroring to the first device.

14. A screen mirroring sharing method, comprising:
under a condition that a call connection is established between a first device and a second device, receiving, by the second device, an elementary stream ES from the first device, wherein the ES is extracted based on screen mirroring information of a third device; and
playing, by the second device, the ES.

15. The method according to claim 14, wherein the method further comprises:
negotiating first parameter information, wherein the first parameter information is used by the first device and the second device to share the screen mirroring information in a call process.

16. The method according to claim 15, wherein the first parameter information comprises an audio channel and/or a video channel to be established by the first device and the second device to share the screen mirroring information.

17. The method according to any one of claims 14 to 16, wherein the screen mirroring information comprises audio information and/or video information; and the ES comprises an ES of the audio information and/ an ES of the video information.

18. The method according to claim 17, wherein the receiving, by the second device, the ES from the first device comprises:
receiving, by the second device, the ES of the audio information from the first device through a first audio channel, and/or receiving the ES of the video information from the first device through a first video channel, wherein the first audio channel is an audio channel corresponding to the call connection between the first device and the second device, and the first video channel is a video channel corresponding to the call connection between the first device and the second device; or
receiving, by the second device, the ES of the audio information from the first device through a second audio channel, and/or receiving the ES of the video information from the first device through a second video channel, wherein the second audio channel is an audio channel established by the first device and the second device to share the screen mirroring information, and the second video channel is a video channel established by the first device and the second device to share the screen mirroring information.

19. The method according to any one of claims 14 to 18, wherein the method further comprises:
receiving, by the second device, an original package time PTS corresponding to the ES from the first device.

20. The method according to any one of claims 14 to 19, wherein the method further comprises:
under the condition that the call connection is established between the first device and the second device, interacting, by the second device, with the first device to determine whether a first capability is possessed, wherein the first capability is supporting a channel corresponding to the call connection and supporting a channel other than the channel corresponding to the call connection.

21. The method according to claim 20, wherein the interacting, by the second device, with the first device to determine whether the first capability is possessed comprises:
receiving, by the second device, a first identifier from the first device, wherein the first identifier indicates whether the first device has the first capability; and
sending, by the second device, a second identifier to the first device, wherein the second identifier indicates whether the second device has the first capability.

22. The method according to claim 21, wherein the first identifier is an indication for a quantity of supported channels, or the first identifier is a preset code corresponding to the first device; and
the second identifier is an indication for a quantity of supported channels, or the second identifier is a preset code corresponding to the second device.

23. The method according to claim 15 or 16, wherein the negotiating, by the second device, the first parameter information with the first device comprises:
receiving, by the second device, second parameter information from the first device, wherein the second parameter information is used by the third device to perform screen mirroring to the first device; and
negotiating the first parameter information based on the second parameter information.

24. A communication apparatus, comprising a module or a unit configured to perform the method according to any one of claims 1 to 13, or comprising a module or a unit configured to perform the method according to any one of claims 14 to 23.

25. A communication apparatus, comprising a processor, wherein the processor is coupled to a memory, wherein
the processor is configured to invoke computer instructions in the memory, so that the communication apparatus performs the method according to any one of claims 1 to 13, or performs the method according to any one of claims 14 to 23.

26. A computer-readable storage medium, wherein the computer-readable storage medium stores computer-executable instructions, and when the computer-executable instructions are invoked by the computer, the method according to any one of claims 1 to 13 or the method according to any one of claims 14 to 23 is performed.

27. A computer program product, comprising instructions, wherein when the instructions are run on a computer, the method according to any one of claims 1 to 13 or the method according to any one of claims 14 to 23 is performed.

28. A chip, wherein the chip is coupled to a memory, and is configured to read and execute program instructions stored in the memory, to implement the method according to any one of claims 1 to 13 or the method according to any one of claims 14 to 23.
